# EUROPEAN PATENT APPLICATION

(11) **EP 0 798 489 A2**
(43) Date of publication of application: **01.10.1997**
(21) Application number: 97104695.8
(22) Date of filing: 19.03.1997
(51) Int. Cl.: F16F 15/04

(54) **Helical compression spring and method for producing same**

(30) Priority: 27.03.1996 JP 71740/96
(71) Applicant: EXEDY CORPORATION, Neyagawa-shi, Osaka 572 (JP)
(72) Inventor: Uehara, Hiroshi, Hirakata-shi, Osaka (JP)
(74) Representative: Weber, Joachim, Dr.

(57) **Abstract**

In order to prevent possible damage of end portions of a helical compression spring, the helical compression spring (8) is wound in a spiral manner. A hardness of coils (8b) on each end thereof is lower than that of central coils (8a). Also, a pitch (P2) of the coils (8b) is shorter than a pitch (P1) of the coils (8a).

## Description

### BACKGROUND OF THE INVENTION

### 1. Field of the Invention

The present invention relates to a helical compression spring and a method for producing the same, and more particularly to a helical compression spring used to absorb torsional vibration in a damper mechanism and a method for producing the helical compression spring.

### 2. Description of the Related Art

A clutch disc assembly used in an automotive vehicle usually includes a pair of input disc plates, a friction coupler fixed to an outer circumferential portion of the input disc plates, an output side hub having a flange extending within the pair of input disc plates, a plurality of helical compression springs for resiliently coupling the pair of input disc plates and the flange in the rotational direction. The helical compression springs are used to transmit torque. At the same time, the helical compression springs are compressed in the circumferential direction in response to, for example, a twist vibration being inputted and the input disc plates and the flange undergo limited relative rotation with respect to each other. The force in the twist vibration is thereby absorbed by the compression springs.

Recently, the helical compression springs used as a torsion spring as described above have been provided so as to have relatively high mechanical strength and relatively high hardness. For example, the helical compression springs may be made of modern material such as high grade alloy metals and is subjected to a carbon impregnated nitride process to provide a higher hardness when compared to older type springs.

When the hardness of a helical compression spring is increased, occasionally the end portions thereof are cut or broken due to contact with the flange or the pair of input plates. Hence, the increased hardness causes the helical compression springs to be damaged. Because of possible damage to the springs, it is necessary to use spring seats with the helical compression spring to avoid such damage, where one spring seat is disposed at each opposite end of the spring.

### SUMMARY OF THE INVENTION

One object of the present invention is to prevent damage to the axial end portions of a helical compression spring.

Another object of the present invention is to reduce the number of parts in a damper disc assembly.

In accordance with one aspect of the present invention, a helical compression spring wound in a spiral manner includes a coil spring having a first group of coils and a second group of coils formed at each axial end of the coils spring with the first group of coils sandwiched in between the second group of coils. The first group of coils has a hardness greater than that of the second group of coils.

Preferably, the first group of coils has a first pitch and the second group of coils has a second pitch, the first pitch being greater than the second pitch.

In accordance with another aspect of the present invention, helical compression spring wound in a spiral manner includes a coil spring having a first group of coils and a second group of coils formed at each axial end of the coils spring with the first group of coils sandwiched in between the second group of coils. The first group of coils has a first pitch and the second group of coils has a second pitch, the first pitch being greater than the second pitch.

Preferably, the first group of coils has a hardness greater than that of the second group of coils.

In accordance with yet another aspect of the present invention, there is a method for producing a helical compression spring, including the steps of:
heat forming a steel line into a spiral form such that the spiral form includes a first group of coils and a second group of coils, the first group of coils having a pitch greater than a pitch of the second group of coils, the second group of coils being formed on each end of the first group of coils;
rapidly cooling the steel line;
tempering the steel line; and
high frequency wave annealing only the second group of coils of the steel line.

In the helical compression spring according to the present invention, since the hardness of the coils on both end sides is lower than that of the coils on the center side, even if the overall hardness is high, the tenacity is generated in both end sides of the coil and damage is less likely to occur. Also, since the pitch of the coils on each end is shorter than that of the coils in the center, when the helical compression spring is compressed, the coils on each end is brought into contact with each other prior to the contact of the coil on the center side. Thus, the larger stresses are not generated on the end coils, which have the lower hardness and damage is less likely to occur.

These and other objects, features, aspects and advantages of the present invention will become more fully apparent from the following detailed description of the present invention when taken in conjunction with the accompanying drawings where like reference numerals denote corresponding parts throughout.

### BRIEF DESCRIPTION OF THE DRAWINGS

Fig. 1 is a cross sectional side view of a clutch disk assembly in accordance with one embodiment of the present invention, the clutch disk assembly having a plurality of helical compression springs;
Fig. 2 is an elevational side view of one of the helical compression springs used in the clutch disk assembly depicted in Fig. 1, shown removed from the clutch disk assembly;
Fig. 3 is a graph showing force vs displacement characteristics of the helical compression spring depicted in Figs. 1 and 2; and
Fig. 4 is an elevational side view similar to Fig. 2, showing an alternate embodiment of the helical compression spring.

### DESCRIPTION OF THE PREFERRED EMBODIMENTS

The present invention will now be described with reference to the accompanying drawings.

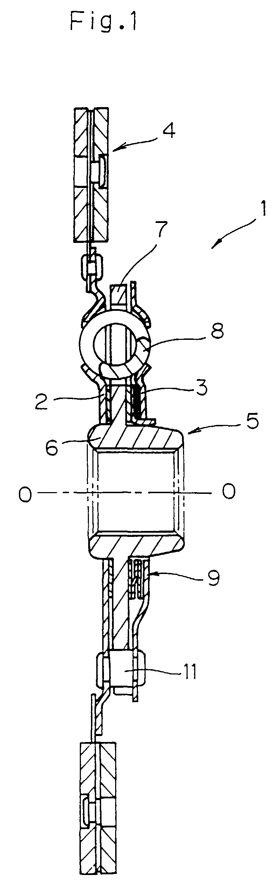

A clutch disc assembly 1 shown in Fig. 1 is an example of a damper mechanism which employs a helical compression spring 8 in accordance with one embodiment of the present invention. The clutch disc assembly 1 is a device for selectively transmitting torque from an engine (not shown) to a transmission (not shown). For reference, the left side of Fig. 1 will hereinafter be referred to as the engine side and the right side of Fig. 1 will be referred to as the transmission side. The clutch disc assembly 1 includes a clutch plate 2 and a retaining plate 3, a clutch coupler 4, a hub 5, a plurality of helical compression springs 8, and a frictional resistance generating mechanism 9.

The clutch plate 2 and the retaining plate 3 are paired plate members having a substantially annular disc shape. The clutch plate 2 and the retaining plate 3 are fixed to each other at the outer circumferential portions by stop pins 11. The clutch coupler 4 which is made of a cushioning plate and friction facings, is fixed to the outer circumferential portion of the clutch plate 2. The hub 5 is composed of a cylindrical boss 6 extending in the axial direction, and a flange 7 radially outwardly from the boss 6.

The boss 6 is disposed in a central hole of the clutch plate 2 and the retaining plate 3 and is spline engaged with an input shaft extending from the transmission side. The flange 7 extends between the plates 2 and 3. Window portions are formed in the flange 7, the clutch plate 2 and the retaining plate 3, respectively, for receiving the plurality of helical compression springs 8. The friction generating mechanism 9 is disposed between the inner circumferential portion of the flange 7 and each of the inner circumferential portions of the plates 2 and 3.

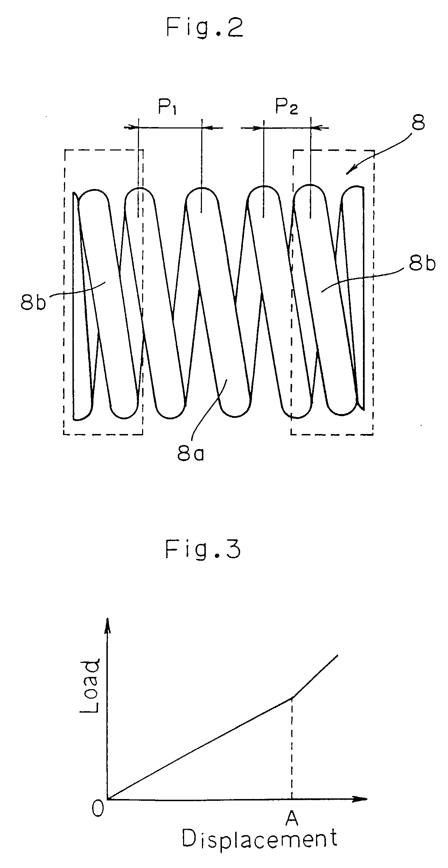

The helical compression springs 8 are members for transmitting the torque from the plates 2 and 3 to the flange 7 and for absorbing twist vibration between the two components. When the plates 2 and 3 and the flange 7 are caused to rotate relative to each other, each helical compression spring 8 is compressed in the circumferential direction relative to the clutch disc assembly 1. The helical compression spring 8 shown in Fig. 2 is composed of a coil extending in a spiral manner and each end thereof is cut so that each end has a flat surface. The helical compression spring 8 is provided with characteristics such as a high mechanical strength and a high hardness by suitable selection of material and a manufacturing process. For instance, the spring 8 may be made of any of a variety of steel alloys, or tempered steels that have been treated to provide surface hardening.

As is apparent from Fig. 2, in the helical compression spring 8, a pitch P1 of the coil 8a on the center side is greater than a pitch P2 of the coil 8b, where the pitch P2 is formed at each end portion of the spring 8. For instance, the pitch P2 may be formed in the two windings surrounded by the dotted lines in Fig. 2. Also, the hardness of the coil 8a, for instance, the center portion of the spring 8, is higher than that of the coils 8b.

A method for producing the helical compression spring 8 will now be described. First of all, a drawn steel line is heated at a high temperature and is formed into a spiral form by a coiling machine. Subsequently, the steel line is introduced into an oil bath and rapidly cooled. Subsequently, the steel line is subjected to a tempering treatment. Then the steel line is subjected to a carbon impregnated nitride treatment so that the overall hardness is increased. Subsequently, a high frequency wave heating device is used to partially anneal the coils 8b at each end of the steel line by high frequency wave. Finally, the spring material is subjected to shot peening the surfaces thereof to generate the residual stress.

The coil 8b of the helical compression spring on both end sides has a lower hardness than that of the coil 8a on the center due to the high frequency wave annealing. For this reason, the tenacity of the coil 8b on both end sides is increased. As a result, even with the overall hardness being high, and each end portion of the helical compression spring 8 being in contact with edges of the window portions of the flange 7 and the plates 2 and 3, parts of the helical compression spring 8 are less likely to be damaged than prior art configurations. For the above-described reasons, it is unnecessary to use any spring seats.

Furthermore, the pitch of the coils 8b on each end of the helical compression spring 8 is reduced, so that a structure is attained in which a large level of stress is not generated in the end portions of the coil 8b. For example, when force is exerted on the helical compression spring 8 it is compressed and elastically deforms and all of the coils 8a and 8b are urged closer to one another. The coils 8b are closer to one another than are the coils 8a due to the reduced pitch therebetween. At a certain point A (see Fig. 3), the adjacent edges of the coils 8b will contact each other and will no longer be elastically deformed. At this point A, however, the coils 8a are still separated from one another and in response to further compressive forces, may undergo further elastic deformation. Therefore, from the point 0 to the point A, both coils 8a and 8b undergo some elastic deformation, but from the point A and onward toward the right side if Fig. 3, generally, only the coils 8a should undergo elastic deformation. Thus, even if the overall deformation amount is increased, the stress is not increased in the end portions of the coil 8b. As a result, although the hardness of both end portions of the coil 8b is lower than that of the center portion of the coil 8a, the coil 8b on both end sides less likely to be damaged.

The present invention is not limited to the helical compression spring having a high mechanical strength and a high hardness and produced through the above-described manufacturing method.

However, when the present invention is applied to the high mechanical strength and high hardness helical compression springs, its effect is more pronounced. This is because a helical compression spring becomes more fragile as the hardness increases. Accordingly, a helical compression spring having high hardness characteristics is more liable to experience damage at its circumferential ends due to contact with the relatively rotatable plate members of a disc assembly.

An alternate embodiment will now be described.

A damper mechanism to which a helical compression spring according to the present invention is used is not limited to the foregoing clutch disc assembly. Namely, it is possible to use the helical compression spring according to the present invention in a clutch disc assembly having a two-stage twist characteristic or to other damper mechanisms such as a lockup clutch of a torque converter and a flywheel assembly.

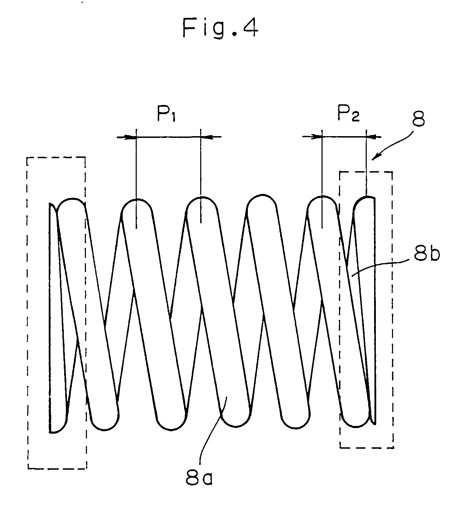

Furthermore, the high frequency wave annealing treatment and the number of the winding turns for decreasing the pitch on both end portions are not limited to those described in conjunction with the foregoing embodiments. In a helical compression spring shown in Fig. 4, a high frequency wave annealing treatment is effected only to one winding of the coil 8b on each end side. In this case, the pitch of each end winding is short.

In the helical compression spring according to the present invention, since the hardness of the coil on both end sides is lower than that of the coil on the center side, even if the overall hardness is high, the tenacity is generated in both end sides of the coil and the damage hardly would be generated. Also, since the pitch of the coils 8b are shorter than that of the coil 8a, when the helical compression spring is compressed, the coils 8b contact each other before the coil 8a contact each other. Thus, since the largest amounts of stress due to compression are not experienced in the coils 8b (which have lower hardness than the coils 8a), damage is less likely to occur in the coils 8b, compared to prior art configurations.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. A helical compression spring wound in a spiral manner comprising:
a coil spring having a first group of coils;
a second group of coils formed at each axial end of said coils spring with said first group of coils sandwiched in between said second group of coils;
wherein said first group of coils has a hardness greater than that of said second group of coils.

2. The helical compression spring as in claim 1 wherein said first group of coils has a first pitch and said second group of coils has a second pitch, said first pitch being greater than said second pitch.

3. A helical compression spring wound in a spiral manner comprising:
a coil spring having a first group of coils;
a second group of coils formed at each axial end of said coils spring with said first group of coils sandwiched in between said second group of coils;
wherein said first group of coils has a first pitch and said second group of coils has a second pitch, said first pitch being greater than said second pitch.

4. The helical compression spring as in claim 3 wherein said first group of coils has a hardness greater than that of said second group of coils.

5. A method for producing a helical compression spring, comprising the steps of:
heat forming a steel line into a spiral form such that the spiral form includes a first group of coils and a second group of coils, the first group of coils having a pitch greater than a pitch of the second group of coils, the second group of coils being formed on each end of the first group of coils;
rapidly cooling the steel line;
tempering the steel line; and
high frequency wave annealing only the second group of coils of the steel line.
